# EUROPÄISCHE PATENTSCHRIFT

(11) **EP 0 729 918 B1**
(45) Veröffentlichungstag und Bekanntmachung des Hinweises auf die Patenterteilung: **04.12.2002**
(21) Anmeldenummer: 95116444.1
(22) Anmeldetag: 18.10.1995
(51) Int. Cl.: C03B 37/00, C03B 23/047, C03B 19/09

(54) **Verfahren zur Herstellung eines polygonalen Quarzglasstabes**
Method for making a polygonal quartz glass rod
Procédé pour la fabrication d'une barre polygonale en verre de quartz

(30) Priorität: 18.10.1994 JP 27851894
(43) Veröffentlichungstag der Anmeldung: 04.09.1996
(73) Patentinhaber: Heraeus Quarzglas GmbH & Co. KG, 63450 Hanau (DE); SHIN-ETSU QUARTZ PRODUCTS CO., LTD., Shinjuku-ku, Tokyo (JP)
(72) Erfinder: Suzuki, Noboru, Koriyama-shi, Fukushima (JP); Suzuki, Masanori, Koriyama-shi, Fukushima (JP); Yamagata, Shigeru, Koriyama-shi, Fukushima (JP); Sakaguchi, Tsukasa, Koriyama-shi, Fukushima (JP)
(74) Vertreter: Kühn, Hans-Christian

(56) Entgegenhaltungen:
- EP-A- 0 627 389
- BE-A- 679 080
- US-A- 3 261 676
- US-A- 3 615 312

## Beschreibung

Die Erfindung betrifft ein Verfahren zur Herstellung eines polygonalen Quarzglasstabes, insbesondere für die Herstellung von Wafer-Horden.

Derartige polygonale Quarzglasstäbe können beispielsweise einen dreieckigen, viereckigen oder sechseckigen radialen Querschnitt aufweisen. Es ist bekannt, derartige Quarzglasstäbe aus Rundstäben durch mechanische Bearbeitung der Oberfläche, wie etwa durch Schneiden oder durch Schleifen herzustellen. Bei diesen Arbeitsverfahren werden in der Oberfläche des polygonalen Quarzglasstabes jedoch Risse induziert und es werden metallische Verunreinigungen in die Oberfläche eingebracht. Um diese oberflächlichen Defekte zumindest teilweise wieder entfernen zu können, ist es erforderlich, die Stäbe nachträglich in Flußsäure zu ätzen. Dabei werden jedoch scharfe Kanten abgerundet.

Weiterhin erfordert bei dem bekannten Verfahren die Einhaltung der Maßhaltigkeit der polygonalen Quarzglasstäbe einen hohen Aufwand an die einzelnen Schritte des Herstellungsverfahrens und es wird zusätzlich durch den beim Herausarbeiten der polygonalen Stäbe aus dem vollen Quarzglas anfallenden Quarzglas-Abfall verteuert.

Weiterhin ist ein Verfahren bekannt, bei dem eine Vorform mit polygonalem Querschnitt bereitgestellt wird und daraus polygonale Quarzglasstäbe durch bereichsweises Erweichen und Langziehen der Vorform hergestellt werden. Bei diesem Verfahren verändert sich jedoch aufgrund der Oberflächenspannung des Glases im erweichten Bereich die Geometrie der abgezogenen polygonalen Stäbe in Richtung auf eine im Querschnitt rundlichere Form. Außerdem werden auch bei diesem Verfahren scharfe Kanten abgerundet. Dies erfordert eine Nachbearbeitung der Stäbe, mit den oben genannten Nachteilen hinsichtlich des Einbringens von Verunreinigungen und der Maßhaltigkeit.

Problematisch bei den bekannten polygonalen Quarzglasstäben ist daher insbesondere die Ausdiffusion von metallischen Verunreinigungen während ihres bestimmungsgemäßen Einsatzes. Diese Ausdiffusion von Verunreinigungen ist insbesondere bei Quarzglas-Vorrichtungen für die Halbleiterherstellung, wie Wafer-Horden, problematisch.

Aus EP-A2-627 389 ist ein Ziehverfahren für stengelförmige, polygonale Glasteile bekannt, die als Abstandshalter für optische Geräte verwendet werden können. Zunächst wird ein Endlos-Rechteckprofil aus einer Vorform eines einheitlichen Glasmaterials gezogen; anschließend werden davon stengelige Abschnitte geschnitten. Derartige, im Profil annähernd rechteckige Glasteile haben sehr kleine Seitenlängen von weniger als 1 mm. Um entsprechend Präzision und Maßhaltigkeit zu gewährleisten, müssen auch diese Teile nach dem Ziehen poliert werden. Dabei ist das Einbringen von Verunreinigungen nicht auszuschließen.

US-A-3,261,676 offenbart ein Ziehverfahren für Quarzglasrohre oder -stäbe, bei dem ein einseitig geschlossenes Hüllrohr mit einem SiO₂-Granulat gefüllt wird und anschließend vertikal durch zwei hintereinander geschaltete Öfen gefahren wird. Das offene Ende des Hüllrohres ist an Vakuum angeschlossen. Insbesondere der erste Ofen dient im Zusammenwirken mit dem Vakuum der Entgasung des Hüllrohres mit seinem Inhalt. Das Herstellverfahren nach US 3,261,676 mit seinen zwei Öfen ist verhältnismäßig aufwendig. Auch kann ein befriedigender Grad an Entgasung nicht immer gewährleistet werden.

Der vorliegenden Erfindung liegt daher die Aufgabe zugrunde, ein Verfahren zur Herstellung eines polygonalen Quarzglasstabes anzugeben, insbesondere für die Herstellung von Wafer-Horden, das eine kontinuierliche und preisgünstige Herstellung derartiger Stäbe erlaubt, wobei der polygonale Quarzglasstab wenig metallische Verunreinigungen freisetzt und möglichst blasenfrei im Sinne einer minimierten Lichtstreuung ist .

Diese Aufgabe wird erfindungsgemäß dadurch gelöst, daß ein polygonales Hüllrohr aus hochreinem Quarzglas an einem Ende verschlossen wird, anschließend mit Quarzglas-Ausgangspulver gefüllt, - wobei es sich bei dem Ausgangspulver um kristallines Pulver aus Bergkristall oder um pegmatitisches Quarzpulver handelt, das hinsichtlich der Metallverbindungen in Form von Verbindungen von Li, Na, K, Ca, Mg, Ti, Cr, Fe, Ni oder Cu einen Verunreinigungsgehalt aufweist, der sich um nicht mehr als 5 ppm von demjenigen des hochreinen Quarzglases des Hüllrohres unterscheidet -, mit dem verschlossenen Ende beginnend kontinuierlich mit einer regelbaren Zuführgeschwindigkeit vertikal einer Erhitzungszone zugeführt, darin in einem Erweichungsbereich erweicht und aus dem Erweichungsbereich ein polygonaler Quarzglasstab mit einer regelbaren Abziehgeschwindigkeit abgezogen wird, wobei innerhalb des Hüllrohres ein Unterdruck gegenüber dem von außen auf das Hüllrohr einwirkenden Außendruck aufrechterhalten und innerhalb des Hüllrohres eine heliumhaltige Atmosphäre eingestellt wird.

Zur Vermeidung der Abgabe von Verunreinigungen besteht das polygonale Hüllrohr aus hochreinem Siliziumdioxid. Der Kern des Quarzglasstabes wird aus feinkörnigem SiO₂-Ausgangsmaterial erschmolzen. Dabei kann der Kern beispielsweise hinsichtlich seiner Temperaturstabilität, seiner chemischen Reinheit, seiner mechanischen Stabilität oder seiner optischen Eigenschaften optimiert werden.

Es wurde gefunden, daß ein derartiger Kern das Ziehen aus einer Vorform erlaubt, ohne daß, abgesehen von der Verkleinerung, wesentliche Änderungen der Geometrie des Querschnitts auftreten. Das feinkörnige Ausgangsmaterial vermag die Geometrie zu stabilisieren.

Um jedoch die Ausdiffusion von Metallverunreinigungen zu vermeiden, hat es sich als erforderlich erwiesen, daß der Kem hinsichtlich der Metallverbindungen von Li, Na, K, Ca, Mg, Ti, Cr, Fe, Ni oder Cu einen Verunreinigungsgehalt aufweist, der sich um nicht mehr als 5 ppm von demjenigen der Oberflächenschicht unterscheidet. Durch den relativ kleinen Konzentrationsgradienten von 5 ppm oder weniger wird die Triebkraft für die Ausdiffusion von Verunreinigungen verringert.

Vor dem Auffüllen des Hüllrohres mit dem Ausgangspulver wird das eine Ende verschlossen. Das Ausgangspulver trägt dazu bei, daß das Hüllrohr während des Langziehens, abgesehen davon von der Dimensionsänderung durch das Langziehen, seine geometrische Form beibehält. Das Ausgangspulver vermag die Geometrie im Erweichungsbereich zu stabilisieren. Eine Erklärung hierfür liegt darin, daß im Erweichungsbereich eine Deformation des Hüllrohres erfolgt, bei der die Seitenwände nach innen gewölbt sind. Grund für diese Deformation ist der Dichteunterschied zwischen dem Ausgangspulver und dem Quarzglas des Hüllrohres. Die Innenwölbung der Seitenwände des Polygons beruht darauf, daß die Kanten im Vergleich zu den Seitenwänden eine größere Quarzglasmasse enthalten und daher zunächst relativ formstabil sind und den Formänderungstendenzen länger standhalten als die Seitenwände. Beim Abziehen des polygonalen Stabes aus dem Erweichungsbereich wirk sich dann jedoch die Oberflächenspannung mehr und mehr aus, die in Richtung einer Abrundung des Stab-Querschnittes wirkt. Dabei werden insbesondere die besonders ausgeprägten Kanten abgebaut und nach innnen, in Richtung auf den Kern des Stabes gezogen. Dieser Abau der Kanten ist relativ leicht zu beobachten und kann durch Abkühlen des Stabes abgebrochen werden. Das Abkühlen kann dadurch erfolgen, daß der Stab aus der Erhitzungszone ausreichend schnell entfernt wird, oder auch durch eine zusätzlich Zwangskühlung.

Das Ausgangspulver kann hinsichtlich seiner Viskositätseigenschaften optimiert sein, beispspielsweise kann esbei der im Erweichungsbereich eingestellten Temperatur eine höhere Viskosität aufweisen als das Quarzglas des Hüllrohres.

Um das Entweichen von Restgasen zwischen den Pulverteilchen des Ausgangspulvers zu gewährleisten, wird innerhalb des Hüllrohres ein Unterdruck aufrechterhalten.

Während des Langziehens wandert die Erweichungsfront, vom unteren Ende des Hüllrohres beginnend, kontinuierlich nach oben. Dabei wird das Ausgangspulver durchgeschmolzen, Restgase entfernt und so ein Kern aus transparentem Quarzglas erzeugt.

Weiterhin wird innerhalb des Hüllrohres eine heliumhaltige Atmosphäre eingestellt. Helium diffundiert in Quarzglas bekanntermaßen besonders leicht, so daß bei dieser Verfahrensweise die Erzeugung von Blasen im Kern vermieden wird. Zur Einstellung der Heliumatmosphäre im Hüllrohr wird dieses beispielsweise evakuiert und anschließend mit Helium gespült.

Besonders bewährt hat sich ein Verfahren, bei dem zum Einfüllen des Ausgangspulvers ein Röhrchen in das Hüllrohr eingeführt wird, durch das während oder nach dem Einfüllen Helium geleitet wird. Durch diese Verfahrensweise wird das Einbringen von Fremdgasen, also solchen Gasen außer Helium, vermieden.

Vorteilhafterweise wird innerhalb des Hüllrohres ein Unterdruck im Bereich von 1 Pa bis 1 x 10⁵ Pa aufrechterhalten. Es hat sich gezeigt, daß bei diesem Unterdruck die Restgase aus dem Ausgangspulver ausreichend entfernt werden, ohne daß die Gefahr einer unerwünschten Formänderung des Hüllrohres auftritt.

In einer bevorzugten Verfahrensweise wird das eine Ende des Hüllrohres mittels amorphem Quarzglaspulver verschlossen. Amorphes Quarzglaspulver hat einen etwas niedrigeren Schmelzpunkt als kristallines Quarzglaspulver, so daß bei einer Füllung des Hüllrohres mit kristallinem Ausgangspulver das "Anziehen" bei möglichst niedriger Temperatur erleichtert wird.

Als Ausgangspulver wird kristallines Pulver eingefüllt, mit der Maßgabe, daß es sich dabei um Pulver aus Bergkristall oder um pegmatitisches Quarzpulver handelt, wobei der mittlere Durchmesser der Pulverteilchen im Bereich von 10 µm bis 1000 µm liegt, und wobei der Gewichtsanteil von Pulverteilchen mit einem Durchmesser von weniger als 10 µm nicht mehr als 1 Gew.-% beträgt. Es hat sich gezeigt, daß kristallines Ausgangspulver, das einen höheren Erweichungspunkt hat als Quarzglas, die Formstabilität des Hüllrohres besonder gut gewährleistet. Hinsichtlich einer möglichst geringen Blasenbildung hat sich die angegebene Teilchengrößenverteilung als besonders vorteilhaft erwiesen. Bei Pulverteilchen mit Teilchengrößen von weniger als 10 µm besteht die Gefahr, daß sie durch die Aufrechterhaltung des Unterdruckes aus dem Hüllrohr abgesaugt werden. Pulverteilchen mit mittleren Teilchengrößen von oberhalb 1000 µm erzeugen in einer Schüttung besonders große Hohlräume, die anschließend nicht mehr vollständig entfernt werden können. Die Schüttdichte des Ausgangspulvers liegt vorzugsweise im Bereich zwischen 1,2 g/cm³ und 1,6 g/cm³.

Zur Vermeidung von Blasen im Kernmaterial, das heißt in dem von dem Hüllrohr umhüllten, aufgeschmolzenen Ausgangspulver hat sich ein Verfahren bewährt, bei dem das Ausgangspulver vor dem Einfüllen einer Wärmebehandlung unter Wasserstoff oder unter heliumhaltiger Atmosphäre unterworfen wird.

Es hat sich als besonders günsig erwiesen, zu dem Ausgangspulver ein Pulver aus einem Metall oder aus einer Metallverbindung zu mischen. Bei dieser Metallverbindung kann es sich beispielsweise um Aluminiumoxid handeln. Aluminiumoxid erhöht bekanntermaßen die Viskosität von Quarzglas, so daß ein derartiges Pulver aufgrund seiner höheren Viskosität im erweichten Zustand bei einer gegebenen Temperatur zusätzlich zur Formstabilisierung des Hüllrohres beiträgt. Es kann aber auch ein Pulver beigemischt sein, daß die optischen oder physikalischen Eigenschaften des Kernglases verändert. Unter "Kernglas" wird dabei dasjenige Quarzglas verstanden, das durch Aufschmelzen des Ausgangspulvers entsteht.

Bei einer bevorzugten Verfahrensweise wird die Zuführgeschwindigkeit und die Abziehgeschwindigkeit so aufeinander abgestimmt werden, daß der Durchmesser D des Hüllkreises um das Hüllrohr und der Durchmesser L des Hüllkreises um den polygonalen Quarzglasstab der Gleichung D ≥ U2 genügen. Es hat sich gezeigt, daß für eine ausreichende Formstabilisierung des Hüllrohres eine ausreichend große Differenz zwischen der Zuführgeschwindigkeit und der Abziehgeschwindigkeit liegen muß. Diese Differenz läßt sich durch das Ausziehverhältnis beschreiben. Unter dem Ausziehverhältnis wird dabei der Quotient aus dem Durchmesser des Hüllkreises des Hüllrohres zu demjenigen des polygonalen Stabes verstanden. Vorteilhafterweise beträgt das Ausziehverhältnis mindestens 1/2. Es hat sich gezeigt, daß bei diesem Auszieverhältnis die Erweichung des Ausgangspulvers und die im Erweichnungsbereichzu zu beobachtenden Formänderungen, nämlich das Einwölben der Seitenwände einerseits und das Einziehen der kanten anndererseits so aufeinender abgestimmt sind, daß dies zur Erhaltung der Geometrie des Hüllrohres, beiträgt.

Ausführungsbeispiele der Erfindung sind in der Zeichnung dargestellt und werden nachfolgend näher erläutert. In der Zeichnung zeigen im einzelnen in schematischer Darstellung
- Fig. 1:: in (1) einen Querschnitt durch den Erweichungsbereich eines polygonalen Stabes und in (2) einen Querschnitt durch einen dabei erhaltenen, polygonalen Stab bei einem Verfahren nach dem Stand der Technik,
- Fig. 2: den Verfahrensschritt der Einführung eines mit Ausgangspulver gefüllten Hüllrohres in eine Erhitzungszone zur Herstellung eines polygonalen Stabes,
- Fig. 3:: einen Querschnitt durch den Erweichungsbereich entlang der Linie A - A gemäß Figur 1,
- Fig. 4:: einen Querschnitt durch den polygonalen Stab entlang der Linie B - B gemäß Figur 1.
- Fig. 5:: den Verfahrensschritt des Einfüllens von Ausgangspulver in das Hüllrohr,

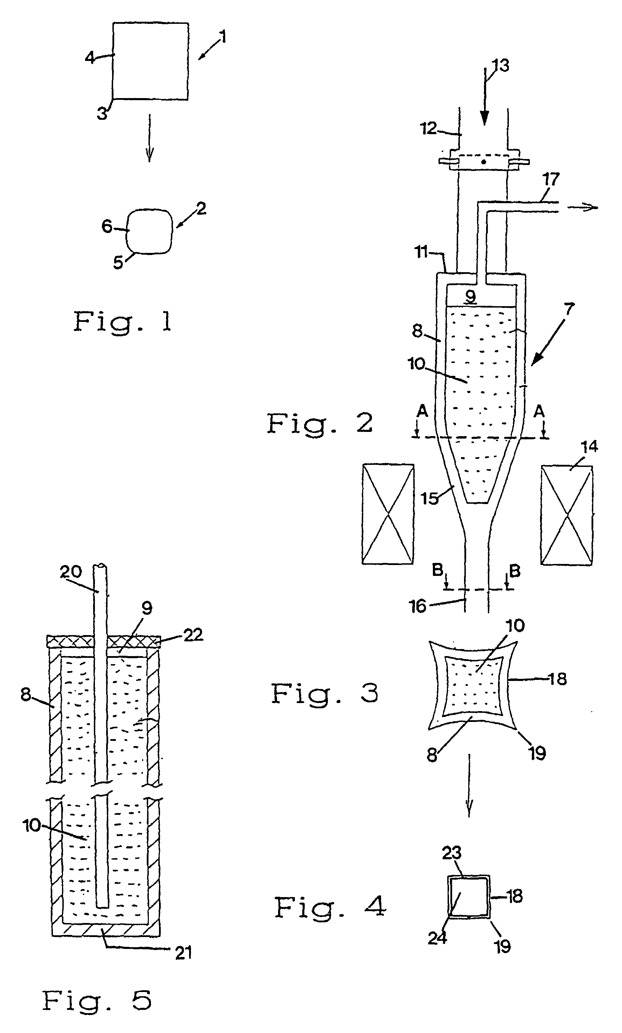

In **Figur 1** ist die Formänderung schematisch dargestellt, wie sie bei einem Verfahren nach dem Stand der Technik eine Vorform 1 mit quadratischem Querschnitt erfährt, aus der durch Ziehen ein Stab 2 mit quadratischem Querschnitt hergestellt werden soll. Aus der schematischen Schnittdarstellung von **Figur 1** ist ersichtlich, daß die ursprünglich scharfen Kanten 3 und flachen Seitenwände 4 der Vorform 1 im resultierenden polygonalen Stab 2 verschwunden sind. Stattdesssen weist der Stab 2 abgerundete Kanten 5 und nach außen gewölbte Seitenwände 6 auf.

In der schematischen Darstellung von **Figur 2** ist einer Vorform mit radialem quadratischem Querschnitt insgesamt die Bezugsziffer 7 zugeordnet. Die Vorform 7 besteht aus einem Hüllrohr 8 aus hochreinem Quarzglas, das bis auf einen kleinen Hohlraum 9 mit Bergkristall-Pulver 10 aufgefüllt ist. Die Vorform 7 wird an ihrem oberen Ende 11 mittels eines Trägers 12 gehalten und mit konstanter Vorschubgeschwindigkeit in Richtung des Richtungspfeiles 13 vertikal in einen Ofen 14 eingeführt. In dem Ofen 14 wird die Vorform 7 bereichsweise erweicht und aus dem erweichten Bereich, der die Form einer Ziehzwiebel 15 aufweist, der Stab 16 mit konstanter Abzugsgeschwindigkeit abgezogen.

Im Ausführungsbeispiel beträgt der Außendurchmesser des Hüllrohres 8 120 mm und seine Wandstärke 3 mm. Der Stab weist einen Außendurchmesser von 25 mm auf. Unter Außendurchmesser wird dabei der Durchmesser des jeweiligen Hüllkreises verstanden. Die Abziehgeschwindigkeit ist auf ca. 27 m/h eingestellt. Das Bergkristall-Pulver 10 weist eine mittlere Korngröße von etwa 100 µm und eine Schüttdichte von ca. 1,5 cm³/g auf. Vor dem Einfüllen des Pulvers 10 wurde dieses unter heliumhaltiger Atmosphäre bei ca. 1000 °C behandelt.

Am oberen Ende 11 des Hüllrohres 8 ist eine Gasleitung 17 angeschweißt, mittels der in dem Hohlraum 9 ein Unterdruck von ca. 10³ Pa aufrechterhalten werden kann. Hierzu ist die Gasleitung 17 mit einer (in der Figur nicht dargestellten) Vakuumpumpe verbunden.

Nachfolgend wird das erfindungsgemäße Verfahren anhand von **Figur 2** näher erläutert:

Zunächst wird das Hüllrohr 8 an seinem unteren Ende verschlossen. Anschließend wird unter Verwendung eines Schüttrüssels das Bergkristall-Pulver 10 in das Hüllrohr eingefüllt, wobei gleichzeitig der Innenraum des Hüllrohres und der Schüttrüssel mit Helium gespült werden. Nach dem Auffüllen des Hüllrohres 8 wird der Hohlraum 9 evakuiert, mit Helium gespült und erneut evakuiert und dabei ein Unterdruck von ca. 10³Pa aufrechterhalten. Die so hergestellte Vorform 7 wird dann mit konstanter Vorschubgeschwindigkeit mittels des Trägers 12 in Richtung des Richtungspfeiles 13 in den vorgewärmten Ofen 14 mit ihrem unteren Ende beginnend, eingeführt. Die Ofentemperatur liegt dabei bei etwas oberhalb 2000 °C.

Anschließend wird die Vorform 7 "angezogen" und anschließend daraus kontinuierlich der Stab 16 mit einem Außenduchmesser von 20 mm abgezogen.

Im Bereich der Ziehzwiebel 15 weist die Vorform 7 einen Querschnitt auf, wie er schematisch anhand der Figur 3 dargestellt ist. Daraus ist ersichtlich, daß die Seitenwände 18 in diesem Bereich nach innen gewölbt sind, wohingegen die Kanten 19 scharf ausgebildet sind. Ursache hierfür sind die Dichteunterschiede zwischen dem Quarzglas des Hüllrohres 8 und dem Pulver 10. Aufgrund der Oberflächenspannung des Quarzglases beim Erweichen geben die schwächeren Seitenwände 18 nach und wölben sich nach innen, während die etwas steiferen Kanten 19 zunächst erhalten bleiben.

Beim weiteren Erweichen des Quarzglases erfolgt eine weitere Formänderung aufgrund der Oberflächenspannung, die in Richtung einer Abrundung des in **Figur 3** gezeigten Querschnittes geht. Hierbei werden die Kanten 19 nach innen eingezogen und dadurch abgebaut.

Das aus diesen Formänderungen resultierende Profil des Stabes 16 ist in **Figur 4** in einem Querschnitt dargestellt. Es ist ersichtlich, daß die Seitenwände 18 gerade und die Kanten 19 scharf ausgebildet sind. Die Position ab der der Stab 16 dieses Profil aufweist, ist relativ leicht zu erkennen. Zum Einfrieren dieses Profils kann an der entsprechenden Position eine Kühlung des Stabes vorgesehen sein.

Der so hergestellte Stab 16 weist eine dünne Oberflächenschicht 23 aus hochreinem Quarzglas auf, die einen Kern 24 aus Quarzglas umschließt. Der aus Bergkristall-Pulver erschmolzene Kern 24 besteht ebenfalls auch aus Quarzglas, wobei sein Verunreinigungsgehalt an den eingangs genannten Metallverunreinigungen um maximal je 4 ppm gegenüber demjenigen der Oberflächenschiicht höher ist. Die Ausdiffusion dieser Metallverunreinigungen kann so wirksam unterbunden werden, so daß der so hergestellte Profil-Stab 16 als Material für Waferhorden optimal geeignet ist. Diese Eignung kann noch dadurch verbessert werden, indem bei der Herstellung der Vorform 7 dem Bergkrsitall-Pulver 10 geringe Mengen - ca. 20 ppm - Aluminiumoxidpulver beigemischt werden, das die Viskosität des Kerns 24 und damit die Temperaturstbilität des Profil-Stabes 16 erhöht.

In Figur 5 ist ein Detail des Verfahrens, nämlich das Einfüllen des Pulvers 10 in das Hüllrohr 8 dargestellt. Sofern hier gleiche Bezugsziffern wie in **Figur 1** verwendet werden, betreffen diese gleiche oder äquivalente Bauteile, wie sie anhand **Figur 1** näher erläutert sind.

Zum Befüllen des Hüllrohres 8 wird dessen unteres Ende 21 mittels eines Pfropfens aus amorphem Quarzglaspulver verschlossen und anschließend das Pulver 10 mittels eines Schüttrüssels 20, durch den gleichzeitig ein Heliumgasstrom geleitet wird, in das Hüllrohr 8 eingefüllt. Das obere Ende 11 des Hüllrohres 8 ist hierzu mit einem Deckel 22 versehen, der eine zentrale Öffnung aufweist, durch den der Schüttrüssel 20 nach außen ragt.

## Patentansprüche

1. Verfahren zur Herstellung eines polygonalen Quarzglasstabes, wobei ein polygonales Hüllrohr (8) aus hochreinem Quarzglas an einem Ende verschlossen wird, anschließend mit Quarzglas-Ausgangspulver (10) gefüllt, - wobei es sich bei dem Ausgangspulver (10) um kristallines Pulver aus Bergkristall oder um pegmatitisches Quarzpulver handelt, das hinsichtlich der Metallverbindungen in Form von Verbindungen von Li, Na, K, Ca, Mg, Ti, Cr, Fe, Ni oder Cu einen Verunreinigungsgehalt aufweist, der sich um nicht mehr als 5 ppm von demjenigen des hochreinen Quarzglases des Hüllrohres unterscheidet -, mit dem verschlossenen Ende (21) beginnend kontinuierlich mit einer regelbaren Zuführgeschwindigkeit vertikal einer Erhitzungszone (14) zugeführt, darin in einem Erweichungsbereich (15) erweicht und aus dem Erweichungsbereich (15) ein polygonaler Quarzglasstab (16) mit einer regelbaren Abziehgeschwindigkeit abgezogen wird, wobei innerhalb des Hüllrohres (8) ein Unterdruck gegenüber dem von außen auf das Hüllrohr (8) einwirkenden Außendruck aufrechterhalten und innerhalb des Hüllrohres (8) eine heliumhaltige Atmosphäre eingestellt wird.

2. Verfahren nach Anspruch 1, **dadurch gekennzeichnet, daß** zum Einfüllen des Ausgangspulvers (10) ein Röhrchen (20) in das Hüllrohr (8) eingeführt wird, durch das während oder nach dem Einfüllen Helium geleitet wird.

3. Verfahren nach Anspruch 1 oder 2, **dadurch gekennzeichnet, daß** innerhalb des Hüllrohres (8) ein Unterdruck im Bereich von 1 Pa bis 1 x 10⁵ Pa aufrechterhalten wird.

4. Verfahren nach einem der vorhergehenden Ansprüche 1 bis 3, **dadurch gekennzeichnet, daß** das eine Ende (21) des Hüllrohres (8) mittels amorphem Quarzglaspulver verschlossen wird.

5. Verfahren nach einem der vorhergehenden Ansprüche 1 bis 4, **dadurch gekennzeichnet, daß** der mittlere Durchmesser der Pulverteilchen des Ausgangspulvers (10) im Bereich von 10 µm bis 1000 µm liegt, und wobei der Gewichtsanteil von Pulverteilchen mit einem Durchmesser von weniger als 10 µm nicht mehr als 1 % beträgt.

6. Verfahren nach einem der vorhergehenden Ansprüche 1 bis 5, **dadurch gekennzeichnet, daß** das Ausgangspulver (10) vor dem Einfüllen einer Wärmebehandlung unter Wasserstoff oder unter heliumhaltiger Atmosphäre unterworfen wird.

7. Verfahren nach einem der vorhergehenden Ansprüche 1 bis 6, **dadurch gekennzeichnet, daß** zu dem Ausgangspulver (10) ein Pulver aus einem Metall oder aus einer Metallverbindung gemischt wird.

8. Verfahren nach einem der vorhergehenden Ansprüche 1 bis 7, **dadurch gekennzeichnet, daß** die Zuführgeschwindigkeit und die Abziehgeschwindigkeit so aufeinander abgestimmt werden, daß der Durchmesser D des Hüllkreises um das Hüllrohr (8) und der Durchmesser L des Hüllkreises um den polygonalen Quarzglasstab (16) der Gleichung D ≥ L/2 genügen.

## Claims

1. A method for making a polygonal quartz glass rod with a polygonal cladding tube made of high purity quartz glass being closed on one end and then filled with quartz glass starting powder (10), the starting powder (10) being a crystalline powder made of rock crystal or a pegmatitic quartz powder which in view of the metal compounds in the form of compounds of Li, Na, K, Ca, Mg, Ti, Cr, Fe, Ni or Cu has an impurity content which does not differ by more than 5 ppm from that of the high purity quartz glass of the cladding tube, and beginning with the closed end (21) being continuously fed perpendicular to a heating zone (14) at an adjustable feeding rate wherein it is softened in a softening zone (15) and a polygonal quartz glass rod (16) is drawn from the softening zone (15) at an adjustable drawing rate, whereby a negative pressure is maintained inside the cladding tube (8) compared to the outer pressure affecting the cladding tube (8) from outside and a helium containing atmosphere is set inside the cladding tube (8).

2. A method according to claim 1, **characterized in that** a small diameter tube (20) is introduced in the cladding tube (8) to fill in the starting powder (10) and through which helium is fed during or after the filing.

3. A method according to claim 1 or 2, **characterized in that** inside the cladding tube (8) a negative pressure is maintained in the range of 1 Pa to 1 x 10⁵ Pa.

4. A method according to one of the aforementioned claims 1 to 3, **characterized in that** the one end (21) of the cladding tube (8) is closed by means of amorphe quartz glass powder.

5. A method according to one of the aforementioned claims 1 to 4, **characterized in that** the average diameter of the powder particles of the starting powder (10) is in the range of 10 µm to 1000 µm and that the weight portion of those powder particles having a diameter of less than 10 µm is not more than 1%.

6. A method according to one of the aforementioned claims 1 to 5, **characterized in that** before filling in the starting powder (10) it is subjected to a heat treatment under a hydrogen or a helium containing atmosphere.

7. A method according to one of the aforementioned claims 1 to 6, **characterized in that** the starting powder (10) is mixed with a powder of a metal or a metal compound.

8. A method according to one of the aforementioned claims 1 to 7, **characterized in that** the feeding rate and the drawing rate are adjusted as such that the diameter D of the envelope circle around the cladding tube (8) and the diameter L of the envelope circle around the polygonal quartz glass rod (16) meet the equation D ≥ L/2.

## Revendications

1. Procédé pour la fabrication d'une barre polygonale en verre de quartz, un tube de gainage polygonal (8) en verre de quartz très pur étant fermé à une extrémité et ensuite rempli de poudre initiale de verre de quartz (10), - où il s'agit pour la poudre initiale (10) de poudre cristalline en cristal de roche naturel ou d'une poudre de quartz pegmatite, qui au vue des composés métalliques sous forme de composés de Li, Na, K, Ca, Mg, Ti, Cr, Fe, Ni ou Cu présente une teneur en impuretés qui ne se différencie de pas plus de 5 ppm de celle du verre de quartz très pur du tube de gainage - étant amené verticalement à une zone de chauffage (14) en commençant par l'extrémité fermée (21) en continu à une vitesse d'avance réglable, étant ensuite ramollie dans une zone de ramollissement (15) et une barre polygonale (16) en verre de quartz étant retirée de la zone de ramollissement (15) à une vitesse de retrait réglable, à l'intérieur du tube de gainage (8) une dépression étant maintenue par rapport à la pression externe agissant de l'extérieur sur le tube de gainage (8) et une atmosphère chargée en hélium étant réalisée à l'intérieur du tube de gainage (8).

2. Procédé selon la revendication 1, **caractérisé en ce que** pour le remplissage de la poudre initiale (10), un petit tube (20) est introduit dans le tube de gainage (8) à travers lequel est dirigé de l'hélium pendant ou après le remplissage.

3. Procédé selon la revendication 1 ou 2, **caractérisé en ce que** qu'à l'intérieur du tube de gainage (8), il est maintenu une dépression comprise de 1 Pa à 1 x 10⁵ Pa.

4. Procédé selon l'une des revendications précédentes 1 à 3, **caractérisé en ce que** l'extrémité (21) du tube de gainage (8) est fermée au moyen de poudres de verre de quartz amorphe.

5. Procédé selon l'une des revendications précédentes 1 à 4, **caractérisé en ce que** le diamètre moyen des particules de la poudre initiale (10) est compris entre 10 µm et 1000 µm, et la part pondérale des particules de poudre avec un diamètre inférieur à 10 µm étant inférieure ou égale à 1 %.

6. Procédé selon l'une des revendications précédentes 1 à 5, **caractérisé en ce qu'**avant le remplissage, la poudre initiale (10) est soumise à un traitement thermique sous hydrogène ou sous une atmosphère contenant de l'hélium.

7. Procédé selon l'une des revendications précédentes 1 à 6, **caractérisé en ce que** la poudre initiale (10) est mélangée à une poudre contenant un métal ou un composé de métal.

8. Procédé selon l'une des revendications précédentes 1 à 7, **caractérisé en ce que** la vitesse d'avance et la vitesse de retrait sont harmonisées l'une à l'autre de sorte que le diamètre D du cercle de gainage autour du tube de gainage (8) et le diamètre L du cercle de gainage autour de la barre polygonale en verre de quartz (16) répondent à l'équation D ≥ L/2.
